# EUROPÄISCHE PATENTANMELDUNG

(11) **EP 3 657 649 A1**
(43) Veröffentlichungstag der Anmeldung: **27.05.2020**
(21) Anmeldenummer: 19210717.5
(22) Anmeldetag: 21.11.2019
(51) Int. Cl.: H02K 49/00, H02K 49/04, H02K 7/10, H02K 49/10

(54) **ELEKTRISCHE DREHEINHEIT**

(30) Priorität: 26.11.2018 DE 102018129772
(71) Anmelder: Schunk GmbH & Co. KG Spann- und Greiftechnik, 74348 Lauffen am Neckar (DE)
(72) Erfinder: Holaschke, Philipp, 75031 Eppingen (DE); Kiesow, Daniel, 74211 Leingarten (DE)
(74) Vertreter: DREISS Patentanwälte PartG mbB

(57) **Zusammenfassung**

Die Erfindung betrifft eine elektrische Dreheinheit mit einem Statorgehäuse und mit einem im Statorgehäuse um eine Drehachse drehbar gelagerten Rotor, wobei im Statorgehäuse Motorspulen zur Erzeugung eines Drehfeldes vorgesehen sind und wobei am Rotor Permanentmagnete vorgesehen sind, die bei Bestromung der Motorspulen zur Erzeugung einer Drehbewegung des Rotors dem Drehfeld der Motorspulen folgen, und mit einer Haltebremse zum Halten des Rotors in einer Halteposition, wobei die Haltebremse als Magnetbremse mit wenigstens einer drehfest am Statorgehäuse angeordneten Bremsspule und wenigstens einem am Rotor angeordneten Bremsscheibe ausgebildet ist, wobei zwischen der Bremsspule und der Bremsscheibe ein Luftspalt vorgesehen ist, der in einer senkrecht zur Drehachse verlaufenden Ebene liegt.

## Beschreibung

Die Erfindung betrifft eine elektrische Dreheinheit mit einem Statorgehäuse und mit einem im Statorgehäuse um eine Drehachse drehbar gelagerten Rotor, wobei im Statorgehäuse bzw. am Rotor Motorspulen zur Erzeugung eines Drehfeldes vorgesehen sind und wobei am Rotor bzw. im Statorgehäuse Permanentmagnete vorgesehen sind, die bei Bestromung der Motorspulen zur Erzeugung einer Drehbewegung des Rotors dem Drehfeld der Motorspulen folgen, und mit einer Haltebremse zum Halten des Rotors in einer Halteposition, beispielsweise bei einem Notstopp.

Derartige elektrische Dreheinheiten sind in vielfältiger Art und Weise bekannt. Sie finden beispielsweise in der Handhabungstechnik Verwendung, in der Bauteile gegriffen werden, und in der die gegriffenen Bauteile durch Verdrehen umgesetzt werden.

Beispielsweise vertreibt die Anmelderin unter der Bezeichnung Drehmodul ERS elektrische Dreheinheiten mit einem Stator und einem antreibbaren Rotor, wobei eine pneumatische Haltebremse zum Halten des Rotors in einer Halteposition vorgesehen sein kann.

Gemäß dem bekannten Stand der Technik ist zum Halten bzw. Festsetzen des Rotors eine pneumatische Haltebremse vorgesehen. Dies hat den Nachteil, dass der Dreheinheit Pneumatikleitungen zuzuführen sind, welche Druckluft für die pneumatische Haltebremse zur Verfügung stellen.

Der vorliegenden Erfindung liegt die Aufgabe zugrunde, eine eingangs genannte Dreheinheit bereitzustellen, die eine Haltebremse vorsieht, die druckluftfrei arbeitet. Ferner soll die Dreheinheit insgesamt kompakt bauen.

Diese Aufgabe wird gelöst durch eine elektrische Dreheinheit mit den Merkmalen des Patentanspruchs 1. Insbesondere ist vorgesehen, dass die Haltebremse als Magnetbremse mit wenigstens einer drehfest am Statorgehäuse angeordneten Bremsspule und einer am Rotor angeordneten Bremsscheibe ausgebildet ist, wobei zwischen der Bremsspule und dem Bremsscheibe ein Luftspalt vorgesehen ist, der in einer senkrecht zur Drehachse verlaufenden Ebene liegt, und wobei die Bremsspule in radialer Richtung zwischen der Drehachse und den Motorspulen angeordnet ist.

Die Erfindung hat den Vorteil, dass ein verschleißfreies Bremsen und Halten des Rotors aufgrund des Vorsehens der Magnetbremse möglich ist. Dadurch, dass der Luftspalt zwischen der Bremsspule und dem Bremsscheibe senkrecht zur Drehachse verlaufend angeordnet ist, kann der Luftspalt auf einfache Art und Weise realisiert und eingestellt werden. Insgesamt ergibt sich dadurch eine Dreheinheit, die kompakt baut, da keine weiteren medienführende Anschlüsse, insbesondere keine Pneumatikanschlüsse, erforderlich sind.

Dadurch, dass die Bremsspule in radialer Richtung zwischen der Drehachse und den Motorspulen angeordnet ist, ergibt sich eine bauraumsparende Anordnung. Der Aufbau kann dabei derart sein, dass von radial innen nach radial außen zunächst die Rotorwandung vorgesehen ist, an welcher dann radial außen die Motorspulen vorgesehen sein können. Die Motorspulen ihrerseits können dann von den am Rotor vorgesehenen Permanentmagneten umgriffen werden, wobei weiter radial außen den Permanentmagneten gegenüberliegend die Motorspulen am Stator angeordnet sein können.

Vorteilhafterweise sind in oder an der Bremsspule und/oder in oder an der Bremsscheibe Permanentmagnete zur Bereitstellung der magnetischen Haltekraft vorgesehen.

Ferner ist vorteilhaft, wenn Verstellmittel zum axialen Ein- und/oder Verstellen der Bremsspule zur Einstellung des Luftspalts vorgesehen sind. Die Breite des Luftspalts, also der Abstand der Bremsspule zur Bremsscheibe, ist von entscheidender Bedeutung für die Funktion der Magnetbremse. Vorteilhafterweise liegt der Luftspalt im Bereich von 0,1 mm bis 0,7 mm und insbesondere im Bereich von 0,2 mm bis 0,5 mm. Um einen idealen Luftspalt zu erhalten, sind die Verstellmittel vorgesehen.

Die Verstellmittel können insbesondere als Verstellschrauben und/oder als Unterlegelemente ausgebildet sein. Mittels Verstellschrauben ist es denkbar, die axiale Position der Bremsspulen zu verstellen. Mittels Unterlegschreiben ist es denkbar, einen dauerhaften und unveränderbaren Abstand zwischen der Bremsspule und der Bremsscheibe vorzusehen. Die Verstellschrauben können beispielsweise am Gehäuse drehbar angeordnet sein und ein Gewinde aufweisen, das ein an der Bremsspule vorgesehenes Gegengewinde kämmt, so dass beim Verdrehen der Verstellschrauben die Bremsspule in axialer Richtung verstellt wird. Die Unterlegelemente können beispielsweise Ringscheiben sein, welche zwischen die Bremsspule und eine Auflagefläche am Statorgehäuse einlegbar sind.

Bei einer weiteren Ausführungsform ist vorteilhafterweise vorgesehen, dass die Bremsscheibe entlang einer senkrecht zur Drehachse verlaufenden Ebene angeordnet sind und dass die Permanentmagnete entlang einer um die Drehachse verlaufenden Ebene angeordnet sind. Hierdurch ergeben sich geometrisch günstige Verhältnisse, um auf kleinem Bauraum eine Funktionssicherheit des Drehantriebs zu gewährleisten. Zur Anordnung der Bremsscheibe und der Permanentmagnete am Rotor ist vorteilhaft, wenn der Rotor einen Rotorhalter umfasst. Der Rotorhalter kann insbesondere lösbar am Rotor angeordnet sein. Der Rotorhalter kann ferner aus einem anderen Material als der Rotor ausgebildet sein, wobei der Rotor beispielsweise aus einem metallischen Material und der Rotorhalter aus einem Kunststoffmaterial gebildet sein kann.

Beispielsweise kann am Rotorhalter ein sich um die Drehachse verlaufender Magnetring vorgesehen sein, wobei auf der der Drehachse abgewandten Seite des Magnetrings die Permanentmagnete angeordnet sind. Der Magnetring kann dabei einstückig mit dem Rotorhalter oder als separates Bauteil ausgebildet sein.

Ferner ist denkbar, dass der Rotorhalter eine sich senkrecht zur Drehachse erstreckende Halterwand umfasst, wobei auf der der Bremsspule zugewandten Seite der Halterwand die Bremsscheibe angeordnet sind.

Ferner ist denkbar, dass der Rotorhalter einen sich um die Drehachse verlaufenden Ringabschnitt aufweist, der an seiner radial äußeren Seite Magnetelemente aufweist, die mit einem Magnetfeldsensor zur Bestimmung des Drehwinkels des Rotors zusammenwirken. Die Magnetelemente können dabei als Magnetband ausgebildet sein. Der Magnetfeldsensor kann dabei vorteilhafterweise am Statorgehäuse so angeordnet sein, dass er relativ zum Ringabschnitt justierbar und ggf. auch austauschbar ist.

Der Rotor als solcher kann gemäß der Erfindung einen zylindrischen Schaftabschnitt und einen Flanschabschnitt aufweisen, wobei zur Drehlagerung des Rotors ein erstes Wälzlager am Flanschabschnitt und ein zweites Wälzlager an dem dem Flanschabschnitt abgewandten Ende des Schaftabschnitts vorgesehen ist. Insgesamt ergibt sich hierdurch eine vorteilhafte Kraftabstützung.

Dabei ist ferner vorteilhaft, wenn der Rotorhalter an dem dem Statorgehäuse vorgesehenen Bereich des Flanschabschnitts am Flanschabschnitt angeordnet ist. Hierdurch ergeben sich ebenfalls günstige geometrische Verhältnisse. Zudem kann auf kleinstem Raum eine optimale Anordnung der einzelnen Bauteile erfolgen.

Weitere Einzelheiten und vorteilhafte Ausgestaltungen der Erfindung sind der nachfolgenden Beschreibung zu entnehmen, anhand derer ein Ausführungsbeispiel der Erfindung näher beschrieben und erläutert ist.

Es zeigen:
- Figur 1: eine freigeschnittene erfindungsgemäße Dreheinheit in perspektivischer Ansicht;
- Figur 2: einen Längsschnitt durch die Dreheinheit gemäß Figur 1; und
- Figur 3: eine Explosionszeichnung der Dreheinheit gemäß Figur 1 und 2.

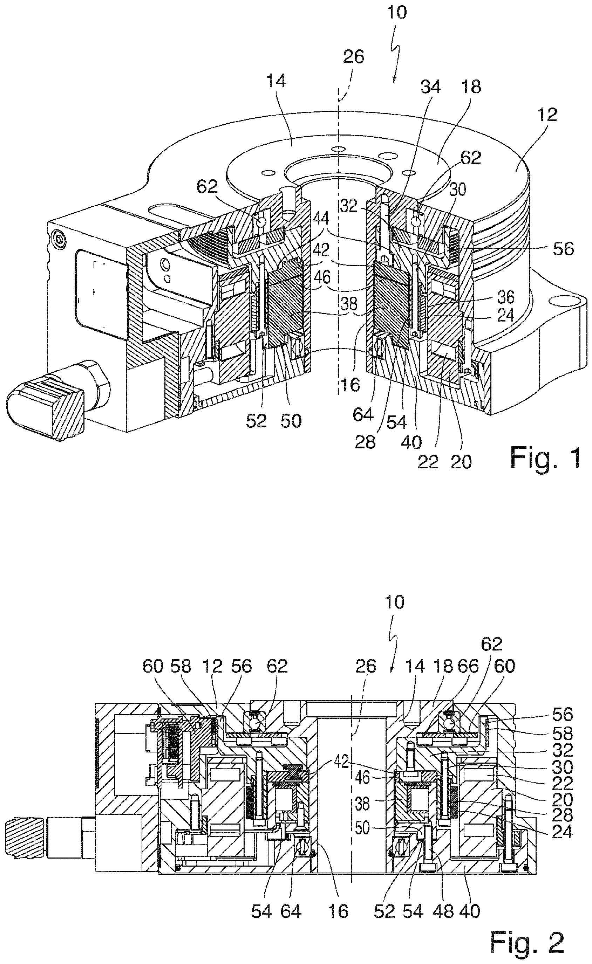

Die in den Figuren 1 bis 3 gezeigte elektrische Dreheinheit 10 umfasst ein Statorgehäuse 12 sowie einen Rotor 14. Wie aus dem Schnitt gemäß Figur 1 deutlich wird, weist der Rotor 14 einen weitgehend zylindrischen Schaftabschnitt 16 auf sowie einen in radialer Richtung über den Schaftabschnitt 16 überstehenden Flanschabschnitt 18.

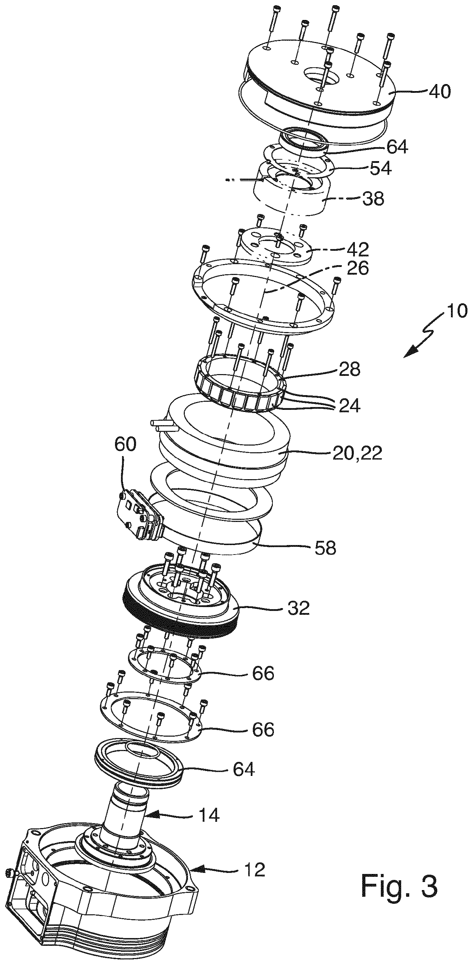

Im Statorgehäuse 12 sind in einem Ringelement 20 Motorspulen 22 untergebracht. Durch Bestromung der Motorspulen 22 wird ein Drehfeld erzeugt, durch welches am Rotor 14 vorgesehene Permanentmagnete 24 in eine um eine Drehachse 26 rotierende Drehbewegung versetzt werden. Die Permanentmagnete 24 sind dabei, wie insbesondere aus Figur 3 deutlich wird, an einem Magnetring 28 angeordnet. Der Magnetring 28 wird dabei über Befestigungsschrauben 30 an einem am Rotor 14 befestigten Rotorhalter 32 befestigt. Der Rotorhalter 32 wird wiederum mittels in Figur 1 gezeigten Befestigungsschrauben 34 am Rotor 14 drehfest angeordnet. Zwischen dem Ringelement 20 bzw. den Motorspulen 22 und den Permanentmagneten 24 ist ein Luftspalt 36 vorgesehen.

Auf der dem Ringelement 20, bzw. den Motorspulen 22 abgewandten Seite des Magnetrings 28 ist, wie ebenfalls aus Figur 1 und 2 deutlich wird, eine Bremsspule 38 vorgesehen, die am Statorgehäuse 12, bzw. einem Statorgehäusedeckel 40, drehfest angeordnet ist. Die Bremsspule 38 wirkt zum Halten und Festsetzen des Rotors 14 mit am Rotor 14, bzw. an dessen Rotorhalter 32, angeordneten Bremsscheibe 42 zusammen. Die Bremsspule 38 bildet zusammen mit den Bremsscheibe 42 eine Magnetbremse. Wie insbesondere aus Figur 2 und 3 deutlich wird, ist die Bremsscheibe 42 in einer Ringscheibe angeordnet, die an einer sich senkrecht zur Drehachse 26 erstreckenden Halterwand 44 des Rotorhalters 32 angeordnet ist.

Zwischen der Bremsscheibe 42 und der Bremsspule 38 ist ein Luftspalt 46 vorgesehen, der sich in einer senkrecht zur Drehachse 26 verlaufenden Ebene erstreckt. Der Luftspalt 46 ist dabei wesentlich für die Funktion der von der Bremsscheibe 42 und der Bremsspule 38 gebildeten Magnetbremse. Der Luftspalt liegt vorzugweise in einem Bereich von 0,2 mm bis 0,5 mm.

Wie aus Figur 1 und 2 deutlich wird, ist die Bremsspule 38 in radialer Richtung zwischen der Drehachse 26 und den Motorspulen 22 bzw. dem Ringelement 20 angeordnet, woraus sich eine sehr klein bauende Dreheinheit 10 ergibt.

Die Bremsscheibe 42 ist entlang einer senkrecht zur Drehachse verlaufenden Ebene angeordnet. Die Permanentmagnete 24 sind entlang einer um die Drehachse 26 verlaufenden Ebene angeordnet.

Wie aus Figur 2 deutlich wird, ist die Bremsspule 38 mittels Befestigungsschrauben 48 am Statorgehäuse 12, bzw. dessen Deckel 40, drehfest angeordnet. Die Bremsspule 38 weist auf ihrer dem Deckel 40 zugewandten Seite einen Ringbund 50 auf, der in eine am Deckel 40 vorgesehene Ringausnehmung 52 eingreift. Je nachdem, wie weit der Ringbund 50 in die Ringausnehmung 52 eingreift, ergibt sich ein unterschiedlich breiter Luftspalt 46 zwischen der Bremsspule 48 und der Bremsscheibe 42. Zur Einstellung, wie weit der Ringbund 50 in die Ringausnehmung 52 eingreift, finden Verstellmittel in Form von Unterlegelementen 54 Verwendung. Bei dem in Figur 3 gezeigten Unterlegelement 54 handelt es sich um eine Unterlegscheibe mit einer definierten Dicke. Je nach vorzusehender Breite des Luftspalt kann folglich eine geeignete, eine bestimmte Dicke aufweisende Unterlegscheibe, bzw. ein entsprechendes Unterlegelement 54, Verwendung finden.

Als alternative, nicht dargestellte Verstellmittel können Verstellschrauben Verwendung finden, welche derart angeordnet sind, dass durch Verdrehen der Verstellschrauben der Ringbund 50 unterschiedlich tief in die Ringausnehmung 52 eingreift.

Wie aus den Figuren deutlich wird, umfasst der Rotorhalter 32 in axialer Richtung auf der der Bremsscheibe 42 abgewandten Seite einen um die Drehachse 26 verlaufenden Ringabschnitt 56, der an seiner radial äußeren Seite Magnetelemente in Form eines Magnetbandes 58 aufweist. Das Magnetband 58 wirkt dabei mit einem am Gehäuse drehfest angeordneten Magnetfeldsensor 60, der in Figur 2 und 3 gezeigt ist, zusammen. Mittels des Magnetfeldsensors 60, der die Position des Magnetbands 58 detektiert, kann auf den Drehwinkel des Rotors 14 gegenüber dem Statorgehäuse 12 rückgeschlossen werden.

Der Magnetfeldsensor 60 ist dabei im Statorgehäuse 12 derart angeordnet, dass er von radial außen zu dessen Positionierung und ggf. zu dessen Austausch gut zugänglich ist.

Wie ebenfalls aus den Figuren 1 und 2 deutlich wird, ist der Rotorhalter 32 an dem im Statorgehäuse 12 vorgesehenen Bereich des Flanschabschnitts 14 befestigt. Der Rotor ist über zwei Wälzlager 62, 64 am Statorgehäuse 12 gelagert, wobei ein Wälzlager 62 an der Mantelfläche des Flanschabschnitts 18 angreift und das andere Wälzlager 64 an dem dem Flanschabschnitt 18 abgewandten Bereich des Schaftabschnitts 16. Zur Befestigung der Wälzlagers 62 bzw. 64 am Rotor 14 bzw. am Statorgehäuse 12 können Halteringe 66 vorgesehen sein.

Durch die beschriebene Ausbildung der Dreheinheit 10 kann die Dreheinheit 10 vergleichsweise kompakt bauen und zum einen einen Drehantrieb, der von den Motorspulen 22 und den Permanentmagenten 24 gebildet wird, sowie eine Haltebremse, die von der Bremsspule 38 und der Bremsscheibe 42 gebildet wird, umfassen.

Die Haltebremse ist dabei insbesondere derart eingerichtet, dass bei einer Stromlosschaltung der Bremsspule 38 die Bremsscheibe von der Bremsspule magnetisch angezogen wird, so dass es zu einem Festsetzen des Rotors 14 kommt. Dazu ist es vorteilhaft, wenn in oder an der Bremsspule - und/oder in oder an der Bremsscheibe - Permanentmagneten zur Bereitstellung der magnetischen Haltekraft vorgesehen sind. Bei Bestromung der Bremsspule 38 wird die auf die Bremsscheibe 42 wirkende magnetische Haltekraft aufgehoben bzw. neutralisiert, so dass der Rotor 14 im Statorgehäuse 12 frei verdreht werden kann.

## Patentansprüche

1. Elektrische Dreheinheit (10) mit einem Statorgehäuse (12) und mit einem im Statorgehäuse (12) um eine Drehachse (26) drehbar gelagerten Rotor (14), wobei im Statorgehäuse (12) bzw. am Rotor (14) Motorspulen (22) zur Erzeugung eines Drehfeldes vorgesehen sind und wobei am Rotor (14) bzw. im Statorgehäuse (12) Permanentmagnete (24) vorgesehen sind, die bei Bestromung der Motorspulen (22) zur Erzeugung einer Drehbewegung des Rotors (14) dem Drehfeld der Motorspulen (22) folgen, und mit einer Haltebremse zum Halten des Rotors (14) in einer Halteposition, **dadurch gekennzeichnet, dass** die Haltebremse als Magnetbremse mit wenigstens einer drehfest am Statorgehäuse (12) angeordneten Bremsspule (38) und wenigstens einem am Rotor (14) angeordneten Bremsscheibe (42) ausgebildet ist, wobei zwischen der Bremsspule (38) und dem Bremsscheibe (42) ein Luftspalt (46) vorgesehen ist, der in einer senkrecht zur Drehachse (26) verlaufenden Ebene liegt, wobei die Bremsspule (38) in radialer Richtung zwischen der Drehachse (26) und den Motorspulen (22) angeordnet ist.

2. Elektrische Dreheinheit (10) nach Anspruch 1, **dadurch gekennzeichnet, dass** in oder an der Bremsspule (38) und/oder in oder an der Bremsscheibe (42) Permanentmagneten zur Bereitstellung der magnetischen Haltekraft vorgesehen sind.

3. Elektrische Dreheinheit (10) nach Anspruch 1 oder 2, **dadurch gekennzeichnet, dass** Verstellmittel zum axialen Ein- und/oder Verstellen der Bremsspule (38) zur Einstellung des Luftspalts (46) vorgesehen sind.

4. Elektrische Dreheinheit (10) nach Anspruch 3, **dadurch gekennzeichnet, dass** die Verstellmittel als Verstellschrauben und/oder als Unterlegelemente (54) ausgebildet sind.

5. Elektrische Dreheinheit (10) nach einem der vorhergehenden Ansprüche **dadurch gekennzeichnet, dass** die Bremsscheibe (42) entlang einer senkrecht zur Drehachse (26) verlaufenden Ebene angeordnet ist und dass die Permanentmagnete (24) entlang einer um die Drehachse (26) verlaufenden Ebene angeordnet sind.

6. Elektrische Dreheinheit (10) nach einem der vorhergehenden Ansprüche **dadurch gekennzeichnet, dass** der Rotor (14) einen Rotorhalter (32) umfasst, an dem die Bremsscheibe (42) und die Permanentmagnete (24) angeordnet sind.

7. Elektrische Dreheinheit (10) nach Anspruch 6, **dadurch gekennzeichnet, dass** am Rotorhalter (32) ein um die Drehachse verlaufender Magnetring (28) vorgesehen ist, wobei auf der der Drehachse (26) abgewandten Seite des Magnetrings (28) die Permanentmagnete (24) angeordnet sind.

8. Elektrische Dreheinheit (10) nach Anspruch 6 oder 7, **dadurch gekennzeichnet, dass** der Rotorhalter (32) eine sich senkrecht zur Drehachse erstreckende Halterwand (44) umfasst, wobei auf der der Bremsspule (38) zugewandten Seite der Halterwand (44) die Bremsscheibe (42) angeordnet ist.

9. Elektrische Dreheinheit (10) nach Anspruch 6, 7 oder 8, **dadurch gekennzeichnet, dass** der Rotorhalter (32) einen um die Drehachse (26) verlaufenden Ringabschnitt (56) aufweist, der an seiner radial äußeren Seite Magnetelemente (58) aufweist, die mit einem Magnetfeldsensor (60) zur Bestimmung des Drehwinkels des Rotors (14) zusammenwirken.

10. Elektrische Dreheinheit (10) nach einem der vorhergehenden Ansprüche, **dadurch gekennzeichnet, dass** der Rotor (14) einen zylindrischen Schaftabschnitt (16) und einen Flanschabschnitt (18) aufweist, wobei zur Drehlagerung des Rotors ein erstes Wälzlager (62) am Flanschabschnitt (18) und ein zweites Wälzlager (64) an dem dem Flanschabschnitt (18) abgewandten Ende des Schaftabschnitts (16) vorgesehen ist.

11. Elektrische Dreheinheit (10) nach Anspruch 10, **dadurch gekennzeichnet, dass** der Rotorhalter (32) an dem im Statorgehäuse (12) vorgesehenen Bereich des Flanschabschnitts (18) am Flanschabschnitt (18) angeordnet ist.
